# EUROPEAN PATENT SPECIFICATION

(11) **EP 1 850 205 B1**
(45) Date of publication and mention of the grant of the patent: **15.02.2012**
(21) Application number: 07006983.6
(22) Date of filing: 03.04.2007
(51) Int. Cl.: G06F 1/16, G06F 21/00

(54) **System and methods for coupling a biometric device to a computer**
System und Verfahren zum Ankoppeln einer biometrischen Vorrichtung an einen Computer
Système et procédés pour le couplage d'un dispositif biométrique avec un ordinateur

(30) Priority: 27.04.2006 US 412522
(43) Date of publication of application: 31.10.2007
(73) Proprietor: HEWLETT-PACKARD DEVELOPMENT COMPANY, L.P., Houston, TX 77070 (US)
(72) Inventor: Tracy, Mark S., Houston, Texas 77070 (US); Doczy, Paul J., Houston, Texas 77070 (US)
(74) Representative: Schoppe, Fritz

(56) References cited:
- EP-A2- 1 077 399
- WO-A-01/57784
- JP-A- 10 211 191
- US-A1- 2003 048 256

## Description

### BACKGROUND OF THE INVENTION

Many computer systems provide mechanisms for validating or authorizing users. For example, computers are often provided with a login procedure or mechanism, whereby a user is required to enter a login ID (identification) and/or password in order to access operational components of the computer. Providing an authentication or login sequence in this fashion helps protect operational components and resources of the computer from use or access by unauthorized persons. One problem with this sort of authentication or login sequence, however, is that authorized users sometimes forget the assigned password or user ID for the particular computer. Another problem with authentication or login procedures of this type is that unauthorized users may obtain the login or authorization credentials of otherwise authorized users. When this occurs, unauthorized personnel can access the system and its resources.

Improvements over the above-identified type of systems include systems that provide a mechanism to read user-specific biometric data as the mechanism for authorizing access to the computer and its resources. Such biometric devices may include retinal scanners, fingerprint readers, etc. In this regard, fingerprint readers have been provided in PCMCIA (personal computer memory card international association) cards, which can be inserted in and removed from notebook-type computers. Likewise, fingerprint readers have been incorporated into the housing of notebook-type computers near the keyboard. Such a configuration, however, is problematic if a user desires to use the laptop or notebook computer in a closed or folded configuration (as is often the case when a notebook computer is docked in a docking station located in or under a monitor stand). In such a configuration, the panel of the notebook that carries the display is typically closed against the panel of the computer carrying the keyboard, such that the keyboard and biometric device cannot be readily accessed, and therefore, the user cannot be readily authenticated or authorized for use.

EP 1 077 399 A2 discloses an extension device which is to be mounted in an extension bay of an information processing device, and includes an identification-information-acquisition unit. The identification-information-acquisition unit may include, for example, a biological-information-acquisition unit for acquiring biological information such as fingerprints, retinal patterns, voice, handwritings and facial features, or it may include an ID-card-reader unit for reading an ID card, or a personal-identification-number-entry unit for receiving a personal-identification-number code. The identification-information acquisition unit may be provided fixedly in the information processing device. The extension device may include matching logic for validation.

WO 01/57784 A1 discloses an expansion card with an integrated fingerprint acquisition system that is able to be connected to a portable computer. PCMCIA standards are used for the expansion card. The expansion card is built such that the fingerprint acquisition system is on a slidable carriage which may extend out from the expansion card housing, or may be retracted into the housing when the fingerprint acquisition system is not in use. A locking mechanism keeps the carriage in the retracted position, and a spring provides the force necessary to slide the carriage into the extended position when pressure is placed on the slidable carriage.

JP 10-211191 A discloses a recording and reproducing device using biological information. A finger authentication device collates biological information and stores same in a memory for individual authentication information.

US 2003/0048256 A1 describes a computing device including a motherboard, a keyboard, and a display. The motherboard is built on a flexible substrate using a rigid carrier. IC chips are attached using flip chip bonds that employ stud bumps on the IC chips, and corresponding wells filled with solder on the motherboard. The display and keyboard roll up when not in use and employ super-elastic materials as stiffeners. The computing device may be implemented as a mobile computer, and may include a camera, and biometric security features. Passive cooling is employed, using the area of the roll up devices.

### SUMMARY OF THE INVENTION

It is an object of the invention to provide a portable computer providing further improvements in accessibility or security.

This object is achieved by a portable computer according to claim 1.

### DESCRIPTION OF THE DRAWINGS

The accompanying drawings incorporated in and forming a part of the specification illustrate several aspects of the present invention, and together with the description serve to explain the principles of the invention. In the drawings:

FIG. 1A is a diagram of a computer having a biometric device coupled to the computer in accordance with an embodiment of the invention, with the biometric device being positioned in a extended position.

FIG. 1B is a diagram of the computer of FIG. 1A, with the biometric device being disposed in a retracted position.

FIG. 2A is a diagram of a computer having a biometric device configured in accordance with an alternative embodiment, and disposed in an extended position.

FIG. 2B is a diagram of the computer of FIG. 2A illustrating the biometric device disposed in a retracted position.

### DETAILED DESCRIPTION OF THE PREFERRED EMBODIMENT

Having summarized various aspects of inventive embodiments, reference will now be made in detail to the description of embodiments as illustrated in the drawings. While the embodiments will be described in connection with these drawings, there is no intent to limit the invention to the embodiment or embodiments disclosed herein.

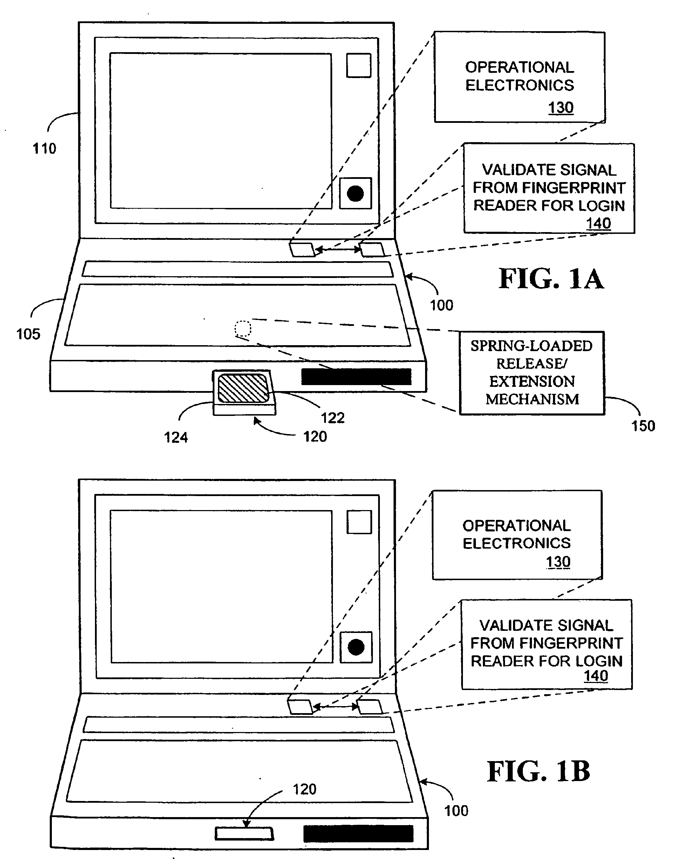

One embodiment of the present invention overcomes the shortcomings of such a configuration, by providing a biometric device that can be accessed for use regardless of whether an associated computer (such as, but not limited to, a notebook computer) is in an open or closed configuration. Reference is made to FIG. 1A and 1B, which illustrate one embodiment of a notebook computer system having a biometric device. Referring first to FIG. 1A, a notebook computer 100 is defined by a body or housing that comprises both a keyboard portion 105 and a display portion 110. The keyboard portion 105 and the display portion 110 are in rotational relationship (e.g., hinged or otherwise configured for movement between open and closed positions). According to the configuration illustrated in FIG. 1A, a biometric device, such as a fingerprint reader 120, is disposed in a position extended from a front-edge of the notebook computer 100.

The illustrated embodiment of the fingerprint reader 120 includes an operative surface 122 (illustrated by a shaded region in the drawing) for reading relevant data from a fingerprint that is pressed in contact, or placed in proximity, therewith. In this embodiment, the operative surface 122 refers to an active area (such as a sensor membrane or optical scanner) of the biometric device. With such devices, a fingerprint is "read" by extracting data that defines certain characteristics of the fingerprint (e.g., whorl, radial loop, ulnar loop, arch and tented arch).

Consistent with the scope of the present invention, any suitable fingerprint reader (or other appropriate biometric device) may be implemented in the embodiment of FIG. 1. In this regard, a variety of mechanisms and devices for reading fingerprint data (or obtaining other biometric data) are known. For example, fingerprint readers are known that utilize surface acoustic wave (SAW) membranes for obtaining the relevant fingerprint data and converting that data into electrical form. Fingerprint readers are also known that utilize optics (or optical scanners) to obtain fingerprint data. Still other fingerprint readers utilize capacitance scanners to extract the relevant fingerprint data.

The operative surface 122 is carried on a tray or platform 124, which is configured to position the operative surface 122 between extended and retracted positions. FIG. 1A illustrates the tray 124 in an extended position and FIG. 1B illustrates the tray in a retracted position. As illustrated in FIG. 1B, when the tray is disposed in the retracted position, the operative surface is substantially (or completely) contained within the body of the notebook computer 100 and thus not exposed for use. A mechanism 150 is associated with the fingerprint reader 120 and configured to control movement of the tray 124 between extended and retracted positions.

Consistent with the embodiments described herein, any of a variety of suitable mechanisms may be implemented for this purpose. One such mechanism 150 (FIG. 1A) includes a spring-loaded release/extension mechanism. A variety of such mechanisms are well suited for implementing the various embodiments of the invention. An example of one such mechanical mechanism, as used for a different purpose, is disclosed in U.S. Patent 6,665,741. That patent describes the push-push mechanism for removing a PC card or I/O device from a computer. In a similar way, the tray or platform 124 can retract within or extend from the computer housing. The push-push type mechanism utilizes latch/release that operates to release the tray 124 from a retracted and latched position upon a slight depression (e.g., further retraction) of the tray 124, such that the tray is extended with the assist of a spring or other biasing mechanism. Upon being pushed again (from the extended to retracted position), the mechanism latches the tray 124 to remain in the retracted (e.g., latched) position until the tray is again pushed.

Operational electronics 130 or other computer resources are provided within the notebook computer 100. Logic 140 is also provided and configured to validate a signal generated by the fingerprint reader 120 for validating a user in connection with a login or other authorization procedure. In one embodiment, the logic 140 comprises computer code for executing a login or authorization sequence, by comparing data obtained from the fingerprint reader 120 with data previously stored on (or accessible by) the computer. Although the logic 140 is illustrated as being disposed within the computer, in accordance with the invention it is fully or partially disposed within the fingerprint reader.

It is contemplated that the fingerprint reader 120 will generally be disposed in the retracted position of FIG. 1B, in order to protect the mechanism from inadvertent harm. When needed, however, for authentication or other reasons, the fingerprint reader 120 may be readily disposed in the extended position of FIG. 1A for convenient access by a user. As can be readily appreciated from the illustrations of FIG. 1A and FIG. 1B, the fingerprint reader 120 is readily accessible regardless of whether the notebook computer 100 is disposed in an open position (as illustrated) or in a closed position (e.g., when placed in a docking station that is located under or in a monitor stand).

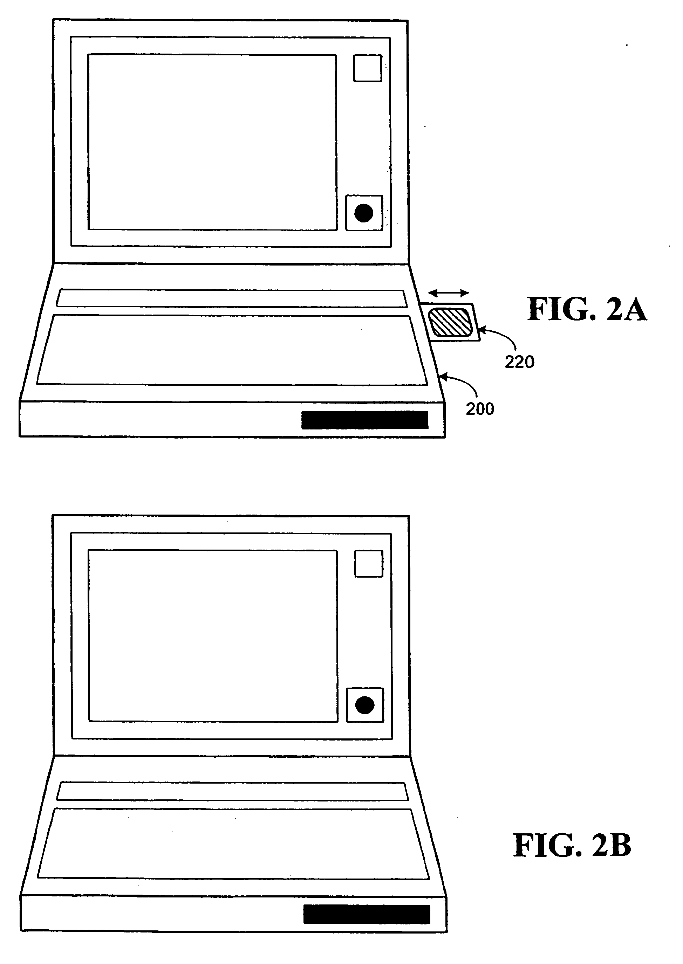

Reference is now made briefly to FIGs. 2A and 2B, which illustrate a notebook computer 200, such as a notebook computer, similar to that of FIGs. 1A and 1B. While the operational electronics and validation logic are not specifically illustrated in FIGs. 2A and 2B, it should be appreciated that these features are provided in the embodiment of FIGs. 2A and 2B. What is relevant for purposes of illustration, however, is the disposition of the fingerprint reader 220 on the side of the notebook computer 200, rather than on the front of the notebook computer 200. In all other respects, the configuration and functional operation of the two embodiments may be the same. It will be appreciated that the fingerprint reader can be disposed in other locations around the computer as well.

In accordance with certain embodiments of the invention, the fingerprint reader is built into the computer as a permanent fixture thereof. Unlike a PCMCIA or other similar types of circuit cards, the platform 124 is physically coupled to the computer in such a way that it cannot be readily detached from the computer (e.g., non-removably attached). This enhances security by preventing circumvention of the fingerprint reader by simply removing the fingerprint reader from the system (e.g., by ejecting a PCMCIA card). In the illustrated embodiment, the platform 124 is preferably permanently attached to the housing of the computer. Although configured for movement between retracted and extended positions, the platform (and therefore operative components of the fingerprint reader) cannot be removed from the computer, thereby preventing circumvention of the associated security measures associated therewith.

Such security measures may vary from embodiment to embodiment. In one embodiment, the operation of the fingerprint reader may be utilized to verify or complete a login process. In another embodiment, identity verification through the fingerprint reader may be required before the laptop will open to allow user access to the keyboard. Such an embodiment may be implemented by coupling the fingerprint reader to an electronic latch that holds the notebook computer in a latched configuration.

## Claims

1. A portable computer (100) comprising:
a fingerprint reader (120) communicatively coupled to operational electronics (130) of the computer (100), the fingerprint reader (120) being physically coupled to a housing (105,110) of the computer (100) in a non-removable fashion, the fingerprint reader (120) having an operative surface (122) for receiving fingerpring data;
a mechanism (150) associated with the fingerprint reader (120) and configured to control movement of the operative surface (122) between extended and retracted positions, wherein the extended position is **characterized** such that the operative surface (122) is exposed for use and the retracted position is **characterized** such that the operative surface (122) is not exposed for use; and
a logic (140) provided and configured to validate a signal generated by the fingerprint reader (120) for validating a user in connection with a login or other authorization procedure,
wherein the logic (140) is at least partially disposed within the fingerprint reader (120).

2. The portable computer of claim 1, wherein the operative surface (122) is disposed on a spring-loaded platform.

3. The portable computer of claim 1, wherein the portable computer (100) is a notebook computer.

4. The portable computer of claim 1, wherein the fingerprint reader (120) is disposed in an area of the computer (100) such that it may be moved between the extended and retracted positions irrespective of a rotational position of a keyboard portion of the computer with respect to a display portion of the computer.

5. The portable computer of claim 1, wherein the retracted position is **characterized** such that the operative surface (122) is substantially contained within the housing (105, 110).

6. The portable computer of claim 1, wherein the retracted position is **characterized by** at least a partial occlusion of the operative surface (122) such that the operative surface is not readily accessible for a reading of fingerprint data.

## Patentansprüche

1. Ein tragbarer Computer (100), der folgende Merkmale aufweist:
einen Fingerabdruckleser (120), der kommunikativ mit der Betriebselektronik (130) des Computers (100) gekoppelt ist, wobei der Fingerabdruckleser (120) physisch mit einem Gehäuse (105, 110) des Computers (100) auf nicht entfernbare Weise gekoppelt ist, wobei der Fingerabdruckleser (120) eine wirksame Oberfläche (122) zum Empfangen von Fingerabdruckdaten aufweist;
einen Mechanismus (150), der dem Fingerabdruckleser (120) zugeordnet ist und konfiguriert ist, um eine Bewegung der wirksamen Oberfläche (122) zwischen einer ausgefahrenen und eingefahrenen Position zu steuern, wobei die ausgefahrene Position derart **gekennzeichnet** ist, dass die wirksame Oberfläche (122) für eine Verwendung freiliegend ist und die eingefahrene Position derart **gekennzeichnet** ist, dass die wirksame Oberfläche (122) für eine Verwendung nicht freiliegend ist; und
eine Logik (140), die bereitgestellt und konfiguriert ist, um ein Signal zu validieren, das durch den Fingerabdruckleser (120) erzeugt wird, zum Validieren eines Benutzers in Verbindung mit einer Anmeldung oder einem anderen Autorisierungsverfahren,
wobei die Logik (140) zumindest teilweise innerhalb des Fingerabdrucklesers (120) angeordnet ist.

2. Der tragbare Computer gemäß Anspruch 1, bei dem die wirksame Oberfläche (122) auf einer federbelasteten Plattform angeordnet ist.

3. Der tragbare Computer gemäß Anspruch 1, wobei der tragbare Computer (100) ein Notebookcomputer ist.

4. Der tragbare Computer gemäß Anspruch 1, bei dem der Fingerabdruckleser (120) in einem Bereich des Computers (100) derart angeordnet ist, dass er zwischen der ausgefahrenen und der eingefahrenen Position bewegt werden kann, unabhängig von einer Drehposition eines Tastaturabschnitts des Computers im Hinblick auf einen Anzeigeabschnitt des Computers.

5. Der tragbare Computer gemäß Anspruch 1, bei dem die eingefahrene Position derart **gekennzeichnet** ist, dass die wirksame Oberfläche (122) im Wesentlichen innerhalb des Gehäuses (105, 110) enthalten ist.

6. Der tragbare Computer gemäß Anspruch 1, bei dem die eingefahrene Position durch zumindest einen Teileinschluss der wirksamen Oberfläche (122) **gekennzeichnet** ist, derart, dass die wirksame Oberfläche nicht ohne Weiteres zum Lesen von Fingerabdruckdaten zugreifbar ist.

## Revendications

1. Ordinateur portable (100) comprenant:
un lecteur d'empreinte digitale (120) couplé en communication à une électronique opérationnelle (130) de l'ordinateur (100), le lecteur d'empreinte digitale (120) étant couplé physiquement à un boîtier (105, 110) de l'ordinateur (100) de manière non amovible, le lecteur d'empreinte digitale (120) présentant une surface fonctionnelle (122) destinée à recevoir les données d'empreinte digitale;
un mécanisme (150) associé au lecteur d'empreinte digitale (120) et configuré pour commander le déplacement de la surface fonctionnelle (122) entre les positions avancée et rentrée, où la position avancée est **caractérisée** de sorte que la surface fonctionnelle (122) soit exposée pour être utilisée et la position rentrée est **caractérisée** de sorte que la surface fonctionnelle (122) ne soit pas exposée pour être utilisée; et
une logique (140) prévue et configurée pour valider un signal généré par le lecteur d'empreinte digitale (120) pour valider un utilisateur en rapport avec une procédure d'accès ou une autre procédure d'autorisation,
dans lequel la logique (140) est au moins partiellement disposée dans le lecteur d'empreinte digitale (120).

2. Ordinateur portable selon la revendication 1, dans lequel la surface fonctionnelle (122) est disposée sur une plate-forme chargée par ressort.

3. Ordinateur portable selon la revendication 1, dans lequel l'ordinateur portable (100) est un ordinateur notebook.

4. Ordinateur portable selon la revendication 1, dans lequel le lecteur d'empreinte digitale (120) est disposé dans une zone de l'ordinateur (100) telle qu'il puisse être déplacé entre les positions avancée et rentrée, quelle que soit la position de rotation d'une partie de clavier de l'ordinateur par rapport à une partie d'affichage de l'ordinateur.

5. Ordinateur portable selon la revendication 1, dans lequel la position rentrée est **caractérisée** de sorte que la surface fonctionnelle (122) soit substantiellement contenue dans le boîtier (105, 110).

6. Ordinateur portable selon la revendication 1, dans lequel la position rentrée est **caractérisée par** au moins une occlusion partielle de la surface fonctionnelle (122) de sorte que la surface fonctionnelle ne soit pas aisément accessible pour une lecture des données d'empreinte digitale.
